# EUROPEAN PATENT APPLICATION

(11) **EP 2 020 571 A1**
(43) Date of publication of application: **04.02.2009**
(21) Application number: 07744455.2
(22) Date of filing: 24.05.2007
(51) Int. Cl.: F23K 5/14, B65D 83/00, H01M 8/04

(54) **PLUG STRUCTURE FOR COUPLER**

(30) Priority: 25.05.2006 JP 2006145579
(71) Applicant: Toyo Seikan Kaisha, Ltd., Tokyo 100-8522 (JP); Kabushiki Kaisha Toshiba, Minato-ku, Tokyo 105-8001 (JP)
(72) Inventor: YOSHIHIRO, Kenji, Yokohama-shi, Kanagawa 230-0001 (JP); YAMAMORI, You, Yokohama-shi, Kanagawa 230-0001 (JP); TAKAHASHI, Kenichi, Yokohama-shi, Kanagawa 235-8522 (JP)
(74) Representative: Jönsson, Hans-Peter
(86) International application number: PCT/JP2007/061044
(87) International publication number: WO 2007/139175

(57) **Abstract**

A projecting connecting portion 32 which is fitted to a socket S10 and a valve seat 33 are provided in a plug main body 31 of a plug P10. The valve main body 31 having a valve head 35 which is urged to the valve seat 33 for sealing is provided in the plug main body 31 and the projecting connecting portion 32. Breaking starting portions 71 and 72 are provided in at least a part of the projecting connecting portion 32 and/or the valve stem 35b. A position at which breaking occurs when an excessive force exceeding a normal range of use is applied is set at a predetermined position whereby, when breakage occurs, the sealed state between the valve seat 33 and the valve head 35a can be maintained.

## Description

### Technical Field

This invention relates to a plug structure of a coupler consisting of a socket and a plug which are detachably fitted and connected together, which can be connected accurately by a simple operation in a case where liquid or other material is shifted from a container to a container on the main body side or where a container itself is replaced and which can maintain a sealed state when an excessive force is applied in the connected state. More particularly, this invention relates to a plug structure of this type which is suitable for use as a plug of a cartridge type container of a methanol fuel cell.

### Background Art

There are cases where it is necessary to supplement liquid such as a liquid material which decreases as a machine or instrument is driven or used and, in such cases, liquid such as a liquid material is supplemented by connecting a cartridge container to a container provided on the side of the machine or instrument, or by replacing a container provided on the side of the main body of the machine or instrument with another container.

For simplifying such connection or replacement of containers, various types of couplers are used and, in this case, a plug is provided on the cartridge container.

For example, in Japanese patent Application Laid-open Publication No. 2003-172487 discloses, as shown in FIG. 5, a connecting device constituting a coupler which consists of a plug P having a main flow path and a subsidiary flow path and a socket S having a main flow path and a subsidiary flow path and capable of being fitted with the plug and communicating with the main flow path and subsidiary flow path of the plug.

In this connecting device constituting the coupler, the socket S has a main flow path 2a formed in the outer periphery of a valve pusher 2 fixed to a holder 1, a subsidiary flow path 2b formed on the outside of the main flow path 2a, and valves 3a and 3b for closing the flow paths 2a and 2b. The valves 3a and 3b are pushed against their valve seats by urging force of springs 4a and 4b to close the main flow path 2a and the subsidiary flow path 2b.

On the other hand, the plug P has a main flow path 6a formed on the outer periphery of a valve main body 6 which is slidably supported on a valve holder 5, a subsidiary flow path 6b formed on the outside of the main flow path 6a and valves 7a and 7b for closing the flow paths 6a and 6b. The valves 6a and 6b are pushed against their valve seats by urging force of springs 8a and 8b to close the main flow paths 6a and the subsidieray flow path 6b.

When these socket S and the plug P are connected together, the subsidiary valve 3b of the socket S first abuts against the subsidiary valve 7b of the plug P and these subsidiary valves are moved in a direction in which they are spaced away against the urging force of the springs 4b and 8b and the subsidiary flow paths 2b and 6b communicate with each other.

As the connection of the socket S with the plug P proceeds, the main valve 3a of the socket S is pushed by the end surface of an inner cylinder of the plug P and thereby is withdrawn against the spring 4a to cause the valve to part away from the valve seat of the valve pusher 2 and open the main flow path 2a of the valve pusher 2. Also, a surface of the end portion of the valve pusher on the side of the socket S abuts against a surface of a valve member provided on the plug main body 6 to push the valve main body 6 against the urging force of the spring 8a and thereby cause the valve main body to withdraw and open the main valve 7a on the side of the plug P for communication with the main flow path 6a.

By this structure, as the subsidiary flow path is communicated, a gas is supplied from a gas supply source to the container and an inner bag is dwindled by the gas pressure whereby liquid in the inner bag can be supplied out of the container through the main flow path on the plug side to the main flow path on the socket side.

### Disclosure of the Invention

In a case where, for example, such connecting device constituting a coupler is used as a coupler for supplementing a fuel of a methanol fuel cell or a coupler for supplementing by replacing a container with another container, super engineering plastics such as polyphenylene sulfide (PPS), polyether ether ketone (PEEK) and liquid crystal polymer (LCP) and general use engineering plastics such as polyethylene terephthalate (PET), polybutylene terephthalate (PBT) and polyacetal (POM) are often used from standpoints of formability and stability of the product. These materials, however, are hard and inferior in elasticity and, therefore, are liable to be damaged when an excessive force is applied in the connected state. It is particularly a problem that where such damage will take place cannot be expected.

It is therefore desired to develop a plug of a coupler which can be connected accurately and stably by a simple operation which, when an excessive force exceeding a normal range of use is applied in the connected state, can maintain a sealed state and can be used safely even if the plug is broken.

This invention has been made in view of the problem of the prior art. It is an object of the invention to provide a plug structure which can be connected accurately and stably by a simple operation and can maintain a sealed state when an excessive force exceeding a normal range of use is applied and the plug is broken.

It is also an object of the invention to provide a plug structure which can release a certain magnitude of bending force and a range of use of the plug thereby can be broadened.

In the first aspect of the invention for overcoming the problem of the prior art, there is provided a plug structure of a coupler consisting of a socket and a plug which are detachably fitted and connected together, said plug structure comprising:
a plug main body of the plug;
a projecting connecting portion provided in the plug main body and being fitted to the socket;
a valve seat provided in the plug main body;
a valve provided in the plug main body and the projecting connecting portion, said valve having a valve head which is urged to the valve seat for sealing; and
means for enabling maintenance of sealing between the valve seat and the valve head even when at least a pat of the projecting connecting portion is broken and separated from the main body.

According to this plug structure of a coupler, since a projecting connecting portion which is fitted to the socket is provided in the plug main body, a valve seat is provided in the plug main body and a valve is provided in the plug main body and the projecting connecting portion, said valve having a valve head which is urged to the valve seat for sealing, and means is provided for enabling maintenance of sealing between the valve seat and the valve head even when at least a pat of the projecting connecting portion is broken and separated from the main body, even if the projecting connecting portion is broken, the sealed state can be maintained and the plug can be used safely.

By this plug structure, the plug can be connected accurately and stably by a simple operation when methanol in a container is supplied to a methanol fuel cell or a container itself is replaced and, when an excessive force exceeding a normal range of use is applied and the plug is thereby broken, the sealed state can be maintained and the plug can be used safely.

In the second aspect of the invention, there is provided a plug structure of a coupler as defined in the first aspect wherein a base portion of the projecting connecting portion being fitted to the socket is formed as a breaking starting portion on the side of the plug.

According to the plug structure of a coupler of this aspect, since a base portion of the projecting connecting portion being fitted to the socket is formed as a breaking starting portion on the side of the plug, the base portion of the projecting connecting portion can be determined as the breaking starting portion and the sealed state can be maintained easily and an erroneous operation after breaking can be prevented.

In the third aspect of the invention, there is provided a plug structure of a coupler as defined in the second aspect wherein the breaking starting portion on the side of the plug is made by a recess formed in the entire periphery or a part of the periphery of a middle portion of the projecting connecting portion.

According to this aspect of the invention, since the breaking starting portion on the side of the plug is made by a recess formed in the entire periphery or a part of the periphery of a middle portion of the projecting connecting portion, even when breaking does not start from the base portion of the projecting connecting portion, breaking will start from the recess formed in the entire periphery or a part of the periphery of the middle portion whereby a breaking portion can be determined and the sealed state can be maintained more easily and an erroneous operation after breaking can be prevented.

In the fourth aspect of the invention, there is provided a plug structure of a coupler as defined in any of the first to third aspect wherein the plug main body and the projecting connecting portion consist of two divided portions.

According to this aspect, since the plug main body and the projecting connecting portion consist of two divided portion, a portion where the plug main body and the projecting connecting portion are separated can be determined at the dividing portion whereby application of an excessive force can be prevented and the sealed state can be maintained by the remaining portion and an erroneous operation can be prevented.

In the fifth aspect of the invention, there is provided a plug structure of a coupler as defined in the fourth aspect wherein the plug main body and the projecting connecting portion which are two divided portions are detachably fitted and connected to each other.

According to this aspect, since the plug main body and the projecting connecting portion which are two divided portions are detachably fitted and connected to each other, a separating force can be adjusted by the connecting force.

In the sixth aspect of the invention, there is provided a plug structure of a coupler as defined in the fourth or fifth aspect wherein a base portion of the projecting connecting portion is formed in a substantially spherical surface which can be moved in pivotal motion..

According to this aspect of the invention, since a base portion of the projecting connecting portion is formed in a substantially spherical surface which can be moved in pivotal motion, when force is applied to the projecting connecting portion, a part of the force can be released by causing the base portion to move in a pivotal motion whereby the range of use can be broadened.

In the seventh aspect of the invention, there is provided a plug structure of a coupler as defined in any of the first to sixth aspects wherein the valve is made of two divided portions of the valve head and a portion having at least a valve stem on the outside of a valve head and the dividing surface of the valve stem is formed in a substantially spherical surface which can be moved in a pivotal motion.

According to this aspect of the invention, since the valve is made of two divided portions of the valve head and a portion having at least a valve stem on the outside of the valve head and the dividing surface of the valve stem is formed in a substantially spherical surface which can be moved in a pivotal motion, when force is applied to the valve, a part of the force can be released by the dividing structure of the valve head and the valve stem and a part of the force can be released also by the pivotal motion of the dividing surface of the valve whereby the range of use can be broadened. By further combining this structure with the structure by which the projecting connecting portion can be moved in a pivotal motion, a structure like a universal joint can be realized and a further excessive force can be absorbed whereby the range of use in which the sealed state can be maintained can be further broadened.

In the eighth aspect of the invention, there is provided a plug structure of a coupler as defined in any of the first to seventh aspects wherein a breaking starting portion on the side of the valve is formed in the valve and a breaking starting portion on the side of the valve provided in the base portion or the middle portion of the projecting connecting portion, or a dividing surface between the plug main body and the projecting connecting portion is provided outside of the breaking starting portion on the valve side or a dividing surface between a valve head and a portion having at least a valve stem thereby to prevent an erroneous operation of the valve head when the projecting connecting portion is broken and separated.

According to this aspect of the invention, since a breaking starting portion on the side of the valve is formed in the valve and the breaking starting portion on the side of the valve provided in the base portion or the middle portion, or a dividing surface between the plug main body and the projecting connecting portion is provided outside of the breaking starting portion on the valve side or the dividing surface between the valve head and the portion having at least the valve stem thereby to prevent an erroneous operation of the valve head when the projecting connecting portion is broken and separated, when breaking and separation due to an excessive force take place, the valve main body is located always inside and, therefore, opening of the valve will not take place whereby the sealed state can be maintained and an erroneous operation can be prevented.

In the ninth aspect of the invention, there is provided a plug structure of a coupler as defined in any of the first to eighth aspects wherein a gripping portion is provided in a dividing surface between the plug main body and the projecting connecting portion for enabling taking out of the projecting connecting portion after breaking and separating of the projecting connecting portion.

According to this aspect of the invention, since a gripping portion is provided in a dividing surface between the plug main body and the projecting connecting portion for enabling taking out of the projecting connecting portion after breaking and separating of the projecting connecting portion, even if the projecting connecting portion remains on the side of the socket in the fitted and connected state, the remaining portion can be taken out easily by gripping portion and the socket can be fitted and connected with another plug.

### Brief Description of the Drawings

FIG. 1 are a vertical sectional view showing an embodiment of a plug structure of a coupler according to the invention with a socket and a vertical sectional view of a broken state of the plug structure.

FIG. 2 are a vertical sectional view showing a plug structure of a coupler of the invention with a suitable valve and a vertical sectional view of detached state of the plug structure.

FIG. 3 are a vertical sectional view showing another embodiment of a plug structure of a coupler of the invention with a socket and a vertical sectional view of a detached state of the plug structure.

FIG. 4 are a vertical sectional view showing an embodiment of a plug structure of a coupler of the invention with a socket, a vertical sectional view of the plug structure used in a pivotal movement and a vertical sectional view of the plug structure in a detached state.

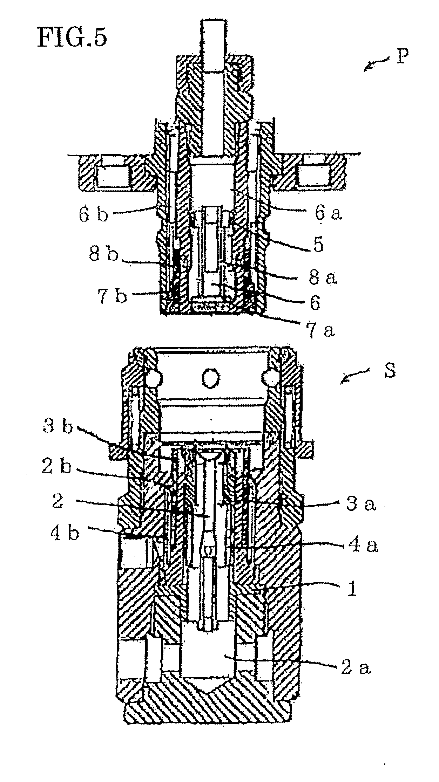

FIG. 5 is a vertical sectional view of a prior art connecting device.

### Description of Preferred Embodiments

Embodiments of the present invention will now be described with reference to the accompanying drawings.

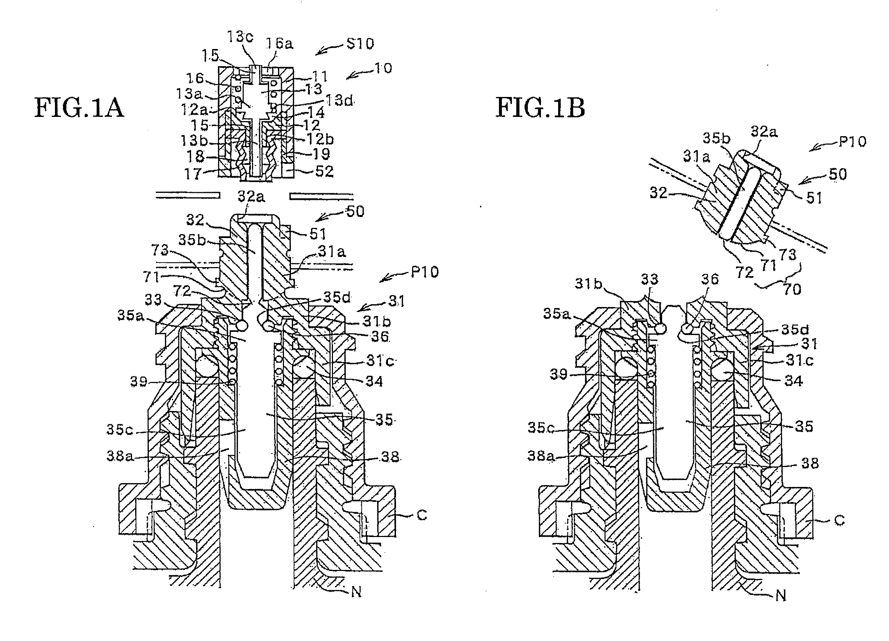

FIG. 1 are a vertical sectional view showing an embodiment of a plug structure of a coupler according to the invention with a socket and a vertical sectional view of a broken state of the plug structure.

Description will first be made about a basic structure of a coupler 10 to which the plug structure of a coupler of the present invention is applied. The coupler 10 is composed of a socket S10 and a plug P10 which is fitted and connected with the socket S10. The socket S10 is provided, for example, on the side of a main body of a methanol fuel cell and the plug P10 is provided on the side of a cartridge as a methanol container for communicating each other to supplement fuel to the fuel cell main body or to replace the cartridge itself.

As a material of a main part of the socket S10 which is fitted and connected with the plug P10 of the coupler 10 can be used metal materials such as stainless steel (SUS) or non-metal materials such as polypropylene (PP), polyphenylene sulfide (PPS), high-density polyethylene (HDPE) and polystyrene (PS). Super engineering plastics having methanol-proof property such as polyether ether ketone (PEEK) and liquid crystal polymer (LCP) and general use engineering plastics such as polyethylene terephthalate (PET), polybutylene terephthalate (PBT) and polyacetal (POM) can also be used as preferable materials.

The following description will be made on the basis of vertical direction of the drawings but it does not restrict actual direction of mounting of the coupler to the main body in any way and, therefore, mounting of the coupler may be made in any direction.

The socket S10 of this coupler 10 to which the plug P10 is fitted and connected has a socket member 11 of a generally cylindrical shape having an inner space which constitutes a valve chamber. This socket member 11 is mounted and fixed to a recessed mounting opening formed in the main body of the fuel cell.

A valve seat member 12 is connected to the central opening of this socket member 11 and a conical surface formed on the upper surface of the valve seat member 12 constitutes a valve seat 12a. A cylindrical valve guide 12b projecting downwardly in the central portion thereof is formed integrally with the valve seat 12a.

A valve main body 13 is mounted above the valve seat member 12 in the valve chamber of the socket member 11. The valve main body 13 has a valve head 13a in a generally disk shape of a large diameter, a valve stem 13b in a columnar shape of a small diameter projecting downwardly in the central portion and a guide portion 13c projecting upwardly in the central portion. These portions 13a, 13b and 13c are formed integrally and the valve stem 13b is reciprocably mounted in the valve guide 12b. The valve head 13a of the valve main body 13 is formed in its lower end portion with an O-ring groove 13d in which an O-ring 14 is mounted. The valve stem 13b and the guide portion 13c provided in the upper and lower end portions of the central portion are formed in their side surfaces with a plurality of grooves which constitute flow paths 15. Through these flow paths 15, the valve chamber in which the valve main body 12 is located communicates with the fuel cell main body located above and the valve chamber communicates also with a plug connecting portion located below in which the plug is connected.

A compression helical spring 16 is provided outside of the valve head 13a with its lower end being in abutting engagement with the valve head 13a and with its upper end being pressed by a spring holder 16a fixed to the upper end portion of the socket member 11. The guide portion 13c of the valve main body 13 is mounted in the central opening formed in the spring holder 16a.

By this arrangement, the valve main body 13 is constantly urged downwardly and, by pressing the O-ring 14 mounted in the O-ring groove 13d against the valve seat 12a and thereby achieving sealing, the valve is closed whereas by causing the O-ring 14 to space away against the force of the compression helical spring 16, the valve is opened.

Below the valve seat member 12 is provided rubber holder 17 as an elastic holder in a manner to cover the valve stem 13b which reciprocates through the valve guide 12b. The flange portion of the rubber holder 17 abuts against the valve seat member 12 and the central opening of the rubber holder 17 abuts against the outer periphery of the valve guide 12b with the inside portion of the central opening constituting a flow path. A bellows portion is formed in a manner to project downwardly from the central opening which bellows portion stretches and shrink in a vertical direction to secure a flow path 18 in the inside in the sealed state.

A cylindrical housing 19 constituting a plug connection space for connecting the plug P10 is provided outside of the rubber holder 17 and below the socket member 11 so that the socket member 11, the rubber holder 17 and the housing 19 are connected integrally together.

In the socket S10 constructed in this manner, the valve can be automatically opened and closed by operation of the valve stem 13b of the valve main body 13 in accordance with connection with the plug P10.

As a material of a main part of the plug P10 which is fitted and connected with the socket S10 of the coupler 10 can be used, in the same manner as in the socket S10, metal materials such as stainless steel (SUS) or non-metal materials such as polypropylene (PP), polyphenylene sulfide (PPS), high-density polyethylene (HDPE) and polystyrene (PS). Super engineering plastics having methanol-proof property such as polyether ether ketone (PEEK) and liquid crystal polymer (LCP) and general use engineering plastics such as polyethylene terephthalate (PET), polybutylene terephthalate (PBT) and polyacetal (POM) can also be used as preferable materials.

As shown in FIG. 1, this plug P10 is mounted on an outer periphery of a tip end portion of a nozzle N of an inner container containing methanol which is a fuel of a fuel cell and is held by a holding cap C which is screwed onto an outer container which protects the inner container. The plug P10 has a plug main body 31 having a generally cylindrical shape of three stages. An upper end portion 31a is of the smallest diameter and a lower end portion 31c following a middle portion 31b is of the largest diameter.

In this plug main body 31 is formed a projecting connecting portion 32 of a generally cylindrical shape having the smallest diameter. The projecting connecting portion 32 projects from the tip end portion of the plug main body 31 and is mounted in the housing 19 forming the plug connecting space of the socket S10. In the tip end portion of the projecting connecting portion 32 is formed a seal recess 32a in which the lower end portion of the rubber holder 17 of the socket S10 is inserted and connected. The central opening of the projecting connecting portion 32 is of a magnitude to enable insertion of the valve stem 13b of the socket S10.

The middle portion 31b having a middle diameter of the pug main body 31 is formed in the inside thereof with a generally conical surface which constitutes a valve seat 33.

In the cylindrical portion of the lower end portion 31c of the plug main body 31 is inserted, along the inner periphery thereof, the nozzle N of the inner container via an O-ring 34. The plug main body 31 is attached to the container by pressing a stepped portion between the middle portion 31b and the lower portion 31c with the holding cap C which is screwed onto the nozzle of outer container housing the inner container.

In the inside of the plug main body 31 is provided a valve main body 35 having a valve head 35a formed in the middle portion which is of a generally disk shape having a large diameter. With this valve head 35a are integrally formed a valve stem 35b having a small diameter and projecting in the central portion of the upper end portion of the plug main body 31, and a guide portion 35c having a large diameter and projecting in the central portion of the lower end portion of the plug main body 31. The valve stem 35b projecting in the central portion of the upper end portion is located in the projecting connecting portion 32 in a manner to reciprocate within the projecting connecting portion 32.

In the upper end portion of the valve head 35a of the valve main body 35 is formed an O-ring groove 35d opposite to the valve seat 33 and an O-ring 36 is mounted in the O-ring groove 35d.

The valve stem 35b and the guide portion 35c which project from the valve head 35a in the upper and lower central portions are formed with a plurality of grooves which form flow paths. These flow paths communicate through the guide portion 35c below with the inner container and communicate through the valve stem 35b above with the socket S10 to be fitted and connected.

For guiding reciprocating motion of the valve main body 35, a valve holder 38 of a generally cylindrical shape is provided surrounding the outside of the guide portion 35c. A flange portion of the valve holder 38 is in abutting engagement with the lower surface of the valve seat 33 of the middle portion 31b of the plug main body 31 and the lower surface of the flange portion is in abutting engagement with the O-ring 34 of the inner container and is screwed onto an inner screw portion of the middle portion 31b.

A compression helical spring 39 is mounted on the outer periphery of the guide portion 35c of the valve main body 35 with its upper end being in abutting engagement with the valve head 35a and with its lower end being held by a middle projecting portion of the valve holder 38.

By this arrangement, the valve main body 35 is urged constantly upwardly and, by pressing the O-ring 36 mounted in the O-ring groove 35d of the valve head 35a for sealing, the valve is closed whereas, by causing the O-ring 36 to space away against the force of the compression helical spring 39, the valve is opened.

A flow-path opening 38a is formed in a lower side wall of the valve holder 38 so that the flow path communicates with the inner container.

In the plug P10 constructed in this manner, the valve is automatically opened and closed by operation of the valve stem 35b of the valve main body 35 in accordance with connection with the socket S10.

For discriminating the socket S10 from other sockets and discriminating the plug P10 from other plugs so that, for example, a socket and a plug for a specific liquid concentration only can be fitted and connected with each other, the socket S10 and the plug P10 of this coupler 10 are provided with a key and a key slot as discrimination means. A key is provided in either of the socket S10 and the plug P10 and a key slot is provided in the other and, by fitting the socket S10 with the plug P10, a socket and a plug which cannot be fitted with each other can be discriminated.

In this coupler 10, as shown in FIG. 1, a key 51 is provided on the outer peripheral surface of the projecting connecting portion 32 of the plug main body 31 of the plug P10. The key 51 is provided, for example, in two diagonal positions (only one is shown in FIG. 1).

A key slot 52 which is fitted with the key 51 is provided in the inner periphery of a lower end portion of the housing 19 of the socket S10 as a slot corresponding to the location of the key 51.

Therefore, by fitting the key 51 of the plug P10 with the key slot 52 formed in the socket S10, the socket S10 and the plug P10 can be discriminated.

By selecting positions of the key 51 and the key slot 52 not only at diagonal positions (180 degree different positions) but also at other different angular positions or changing shapes of the key and the key slot such as width and depth thereof and combining the changed shapes so as to prevent fitting of a socket or plug of a large size with a plug or socket of a small size, many types of sockets and plugs can be discriminated.

In this coupler 10, an unillustrated connection holding means for maintaining the connection of the socket S10 and the plug P10 is provided. As this connection holding means, for example, one side of the connection holding means is formed as a receiving member in which an engaging member is received and the other side of the connection holding means is formed as the engaging member made of, e.g., an elastic material. The engaging member is inserted in and detached from the receiving member in a manner to override a portion of the receiving member in straight direction. The engaging member is received in and connected to the receiving member by flexing the engaging member made of an elastic material and is released by pulling it out of the receiving member. The connection holding means may be made not only of separate members but may be a structure utilizing elasticity of material of the socket S10 and the plug P10.

In this coupler 10, in a case where the projecting connecting portion of the plug P10 is broken off by application of an excessive force exceeding a normal range of use in the state in which the socket S10 is fitted and connected with the plug P10, the valve stem 35b of the valve main body 35 disposed inside of the projecting connecting portion is left in a projecting state. Since the valve can be opened by this valve stem 35b and, as a result, methanol in the container may be leaked out.

To cope with this problem, in a plug structure 70 of this coupler, while the plug main body 31 is made integrally with the projecting connecting portion 32, a recessed portion which constitutes a breaking starting portion 71 on the plug side for determining a breaking portion is formed in the entire periphery of a base portion of the projecting connecting portion 32. Thus, by making this recessed portion thinner than other portion, breaking occurs in this portion first.

The recessed portion formed as the breaking starting portion 71 on the plug side may be made not only in the entire periphery but also in a part of the periphery of the base portion so long as it will weaken strength of such portion. If the projecting connecting portion 32 projects from the central portion of the plug main body 31 without forming a recess, the root portion of the projecting connecting portion 32 is the weakest portion, so that this root portion may be used as the breaking starting portion 71 on the plug side.

In this plug structure 70, a recessed portion constituting a breaking starting portion 72 on the valve side is formed in the entire periphery of a portion between the valve head 35a of the valve main body 35 and the valve stem 35b projecting upward. By making this portion thinner than other portion, breaking will start in this portion first.

The recessed portion formed as the breaking starting portion 72 on the valve side may be made not only in the entire periphery but also in a part of the periphery of this portion so long as it will weaken strength of such portion.

The positions of the breaking starting portion 71 on the plug side and the breaking starting portion 72 on the valve side are so set that the breaking starting portion 72 on the valve side is positioned below (inside) the breaking starting portion 71 on the plug side so that the valve stem 35b which remains in the broken state will be positioned inside of the projecting connecting portion 32 which remain in the broken state.

By this arrangement, an operation such as pushing of the valve stem 35b of the valve main body 35 with a finger can be prevented and the sealed state of the valve thereby can be maintained.

In this plug structure 70, a gripping portion 73 is formed in a portion outside (upper side) of the breaking starting portion 71 on the plug side of the projecting connecting portion 32 for taking out the broken off projecting connecting portion 32 from the socket S10.

By this arrangement, as shown in FIG. 1(b), when the projecting connecting portion 32 remains in a broken state in the socket S10 in the fitted and connected state, the projecting connecting portion 32 can be taken out easily by means of the gripping portion 73.

The projecting portion formed as the gripping portion 73 may be made either in the entire periphery or plural positions in the periphery of the projecting connecting portion 32 so long as the broken off portion can be taken out. A recess may be formed instead of the projection.

According to this plug structure 70 of the coupler, even when the projecting connecting portion 32 is broken by application of an excessive bending force, the function of the valve can be maintained to maintain the sealed state whereby leakage of contents of the container can be prevented and the coupler can be used safely.

Thus, a predetermined plug can be accurately selected and connected for supplying methanol in a container to a methanol fuel cell or replacing a container itself and, when a plug of a coupler is damaged by application of an excessive force, the sealed state can be maintained and the coupler can be used safely.

According to the invention, the breaking starting portion 72 on the valve side is provided outside of the valve head 35a which is sealed with the valve seat 33 of the valve main body 35 and this breaking staring portion 72 on the valve side is formed by a recessed portion in the entire periphery or a part of the periphery and, therefore, a broken off portion can be determined at a predetermined position by means of the breaking starting portion 72 on the valve side and, therefore, the sealed state can be maintained easily and an erroneous operation after breaking can be prevented.

For facilitating breaking off at the breaking starting portions 71 and 72, a material among the above described materials which is easily breakable may be advantageously used. Glass fiber may, for example, be included in the material to facilitate breaking further. A suitable amount of addition of glass fiber is 20 - 60 weight % and, more preferably, 30 weight % or over.

By causing the material to have tensile strain of 3% or below, preferably 2% or below by using such material, the material can be made easily breakable.

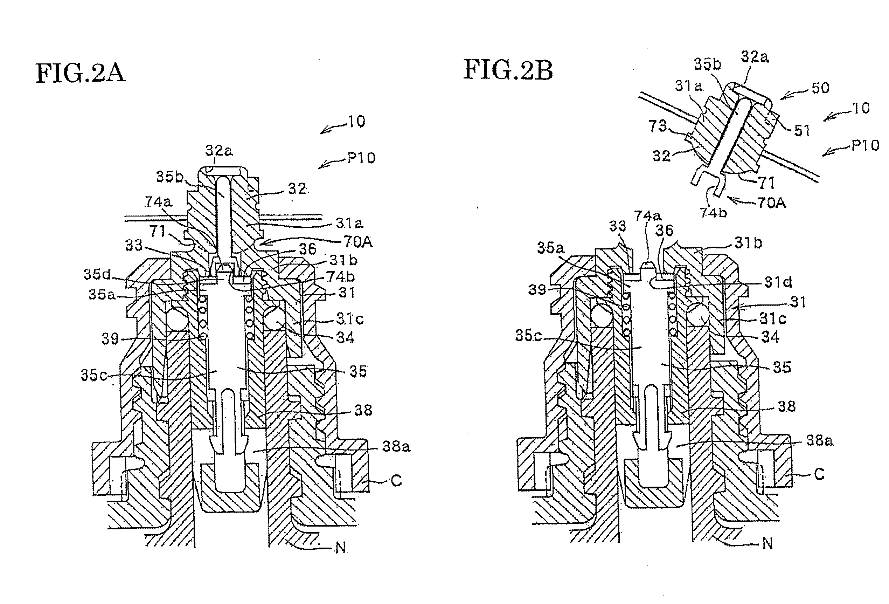

A configuration of a valve which is suitable for use in the plug structure of a coupler of the present invention will now be described with reference to FIG. 2.

In a plug structure 70A, the valve is substituted by a valve of a divided structure. The same components as the above described plug structure 70 are designated by the same reference characters and description thereof will be omitted.

In this plug structure 70A, a valve head 35a of a valve main body 35 located inside of a plug main body 31 and a projecting connecting portion 32 is divided from a valve stem 35b which projects from the valve head 35a. A connecting projection 74a is formed in the upper end portion of the valve head 35a and a connecting recess 74b is formed in the lower end portion of the projecting connecting portion 32 for connecting each other.

The plug main body 31 and the projecting connecting portion 32 are formed integrally as described above and a recessed portion is formed in the entire periphery of a base portion of the projecting connecting portion 32 as a breaking starting portion 71 on the plug side for determining a breaking portion so that, by making this portion thinner than other portion, breaking will occur in this portion first.

Positions of the dividing position (connecting position) between the valve head 35a and the valve stem 35b and the breaking starting portion 71 on the plug side are so set that the positions of the connecting projection 74a and the connecting recess 74b which are the dividing position on the valve side is positioned below (inside) the breaking starting portion 71 on the plug side so that the valve head 35a which remains in the broken state will be positioned inside of the projecting connecting portion 32 which remain in the broken state.

In this valve structure 70A, by forming the valve main body 35 by dividing structure of the valve head 35a and the valve stem 35b, the valve can be operated in the same manner as in the valve head of an integral structure through the connecting projection 74a and the connecting recess 74b in case where the valve is opened against the force of a compression helical spring 39.

On the other hand, when an excessive force exceeding a normal range of use is applied to the plug P10, breaking occurs first in the breaking starting portion 71 formed between the plug main body 31 and the base portion of the projecting connecting portion 32 and, as a result, the valve stem 35b on the upper side is separated with the broken off projecting connecting portion 32 and the sealed state can be maintained with the remaining valve head 35a.

At this time, the projecting connecting portion 32 to which the excessive force is applied is broken off but application of an excessive force to the valve main body 35 is prevented by virtue of a gap between the connecting projection 74a of the valve head 35a and the connecting recess 74b of the valve stem 35b whereby the upper side valve stem 35b only is separated and the sealed state can be maintained easily with the valve head 35a.

According to this plug structure 70A, the valve head 35a and the valve stem 35b outside of the valve head 35a are formed in a divided structure, even when the plug main body 31 and the projecting connecting portion 32 are damaged or broken off due to application of an excessive force, the separating position between the valve main body 35a and the valve stem 35b can be set at a predetermined dividing position and application of the excessive force to the valve side can also be prevented. Moreover, the sealed state can be accurately maintained with the remaining valve head 35a and an erroneous operation can be prevented.

The dividing structure of the valve may be such that the valve is divided in more portions so long as the valve seat 33 and the valve head 35a which is sealed with the valve seat 33 can remain in the plug P10.

In this plug structure 70A also, a gripping portion 73 projecting in the outer peripheral side for taking out the broken off projecting connecting portion 32 from the socket S10 is provided on the outside (upper side) of the breaking starting portion 71 on the plug side in the projecting connecting portion 32.

By this arrangement, as shown in FIG. 2(b), even when the broken off projecting connecting portion 32 is left in the socket S10 in the fitted and connected state, it can be taken out easily by means of the gripping portion 73.

According to this plug structure 70A of the coupler also, even when the projecting connecting portion 32 is broken by application of an excessive bending force, the function of the valve can be maintained to maintain the sealed state whereby leakage of contents of the container can be prevented and the coupler can be used safely.

Thus, a predetermined plug can be accurately selected and connected for supplying methanol in a container to a methanol fuel cell or replacing a container itself and, when a plug of a coupler is damaged by application of an excessive force, the sealed state can be maintained and the coupler can be used safely.

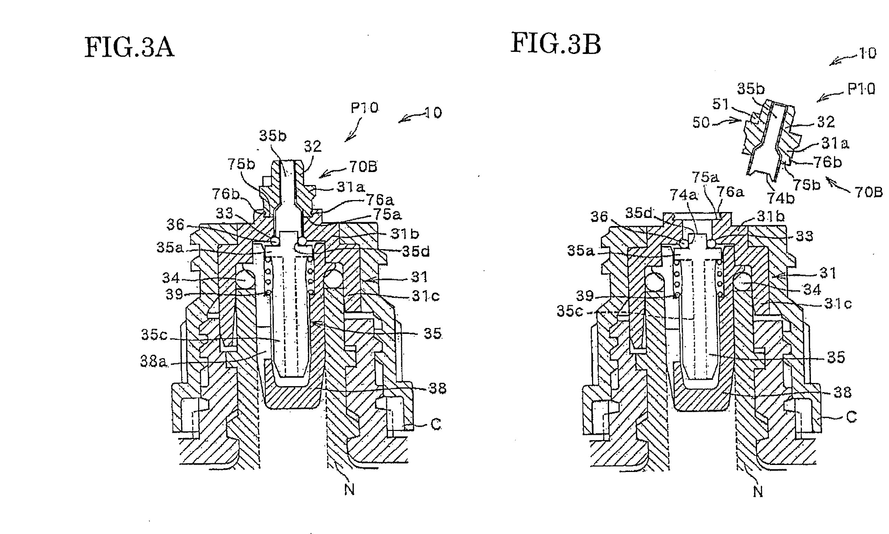

Another embodiment of the plug structure of a coupler according to the invention will be described with reference to FIG. 3.

In this plug structure 70B of a coupler, a dividing structure of the valve and a dividing structure of the plug are added to the plug structure 70 described above.

In this plug structure 70B, a projecting connecting portion 32 projecting from the central portion of the plug main body 31 is divided from a plug main body 31. The plug main body 31 is formed in its upper end portion with a fitting recess 75a having an engaging portion 76a formed in an upper inner peripheral portion thereof while the projecting connecting portion 32 is formed in its lower end portion with a fitting projection 75b having an engaging portion 76b formed in the lower outer peripheral portion thereof.

The fitting recess 75a and the engaging portion 76a of the plug main body 31 and the fitting projection 75b and the engaging portion 76b of the projecting connecting portion 32 which are fitted and connected to the fitting recess 75a and the engaging portion 76a cannot be disengaged from each other by application of force necessary for a normal connecting operation of the coupler 10 but are separated from each other by application of a large force exceeding a normal range of use and thereby the projecting connecting portion 32 is detached from the plug main body 31.

The dividing structure on the valve side is of the same construction as that of the plug structure 70A described above.

Positions of the dividing structure (fitting position) between the plug main body 31 and the projecting connecting portion 32 and the dividing structure (connecting position) of the valve head 35a and the valve stem 35b of the valve main body 35 are so arranged that the position of the connecting projection and recess 74a and 74b on the valve side is positioned below the position of the dividing structure (fitting position) between the plug main body 31 and the projecting connecting portion 32 of the plug main body 31 on the plug side so that the valve head 35a which remains in the broken state will be positioned inside of the projecting connecting portion 32 which remains in the broken state whereby an erroneous operation such as the valve is erroneously opened by touching with a finger can be prevented.

In this plug structure 70B also, in the same manner as in the above described plug structures 70 and 70A, the valve head 35a of the valve main body 35 can be spaced away from the valve seat 33 in the same manner as in the plug of an integral structure by operating the valve stem 35b against the force of the compression helical spring 39.

When an excessive force exceeding a normal range of use is applied to this plug P10, the projecting connecting portion 32 is separated at the fitting recess and projection 75a and 75b and the engaging portions 76a and 76b of the plug main body 31 and the base portion of the projecting connecting portion 32 and, simultaneously, the upper side valve stem 35b is separated with the separated projecting connecting portion 32 whereas the sealed state can be maintained by the remaining valve head 35a.

At this time, an excessive force is applied to the projecting connecting portion and the fitting projection 75b and engaging portion 76b are separated from the fitting recess 75a and engaging portion 76a but application of the excessive force to the plug main body 31 can be prevented as compared to a case where the projecting connecting portion 32 is broken off the plug main body 31.
Accordingly, force by which the projecting connecting portion 32 is separated from the plug main body 31 can be adjusted by configurations of the fitting recess and projection 75a and 75b and the engaging portions 76a and 76b.

Application of an excessive force to the valve main body 35 also can be prevented by the gap between the connecting projection 74a of the valve head 35a and the connecting recess 74b of the valve stem 35b whereby the upper side valve stem 35b only is separated and the sealed state by the valve head 35a can be maintained easily.

Therefore, according to this plug structure 70b, since the valve head 35a is divided from the valve stem 35b outside of the valve head 35a and, additionally, the plug main body 31 is divided from the projecting connecting portion 32, the plug main body 31 and the projecting connecting portion 32 can be separated by application of an excessive force and, moreover, the separating force can be set at a predetermined magnitude and the separating position can be set at the predetermined divided position.

By this plug structure 70B of a coupler also, when the projecting connecting portion 32 is separated by application of an excessive force such as an excessive bending force, the function of the valve is maintained and the sealed state can be maintained whereby leakage of contents from the container can be prevented and the coupler can be used safely.

Thus, a predetermined plug can be accurately selected and connected for supplying methanol in a container to a methanol fuel cell or replacing a container itself and, when a plug of a coupler is damaged by application of an excessive force, the sealed state can be maintained and the coupler can be used safely.

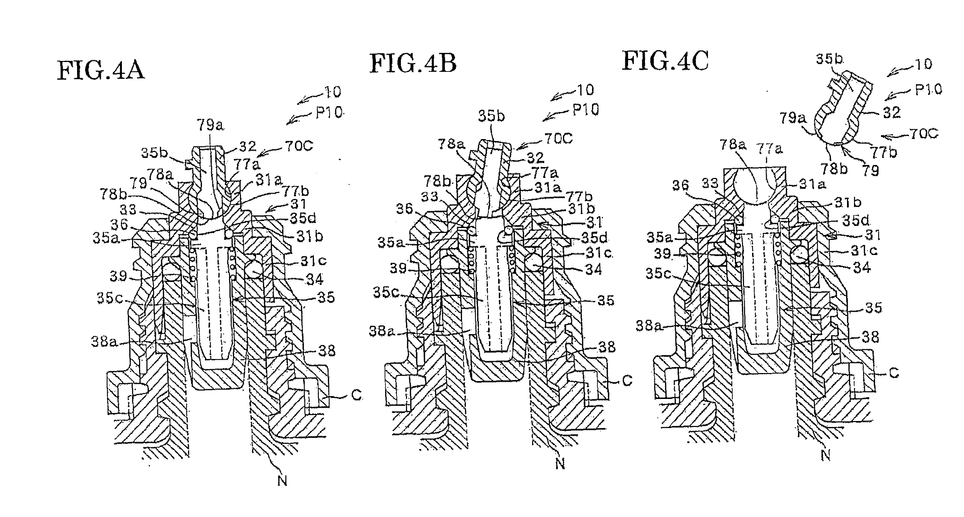

Another embodiment of the plug structure of a coupler according to the invention will now be described with reference to FIG. 4. In this plug structure 70C, in addition to the dividing structure between the valve and plug of the above described plug structure 70B, the valve and the plug can be moved in a pivoting motion to some extent against force exceeding a normal range of use and the coupler can be used in this state while maintaining the sealed state.

In this plug structure 70C, a plug main body 31 and a projecting connecting portion 32 projecting from the central portion of the plug main body 31 are formed as two divided portions and a recessed portion formed in the upper end portion of the plug main body 31 is formed as a pivoting connecting recess 77a having a substantially spherical surface whereas a pivoting connecting projection 77b having a substantially spherical shape projects from the lower end portion of the projecting connecting portion 32.

By this arrangement, the projecting connecting portion 32 can be inclined to the central axis of the plug main body 31 by contact of the spherical surfaces of the pivoting connecting recess 77a and the pivoting connecting projection 77b.

The valve which is disposed inside of the plug main body 31 and the projecting connecting portion 32 is formed as two divided portions of a valve head 35a of a valve main body 35 and a valve stem 35b projecting upwardly from the valve head 35a. The upper end portion of the valve head 35a is formed as a contacting recess 78a having a substantially spherical surface and the lower end portion of the valve stem 35b is formed as a contacting projection 78b having a substantially spherical shape so that they can contact each other by contact of their spherical surfaces.

For preventing interference of the valve stem 35b with the pivoting connecting recess 77a of the plug main body 31 when the valve stem 35b is pushed down for opening the valve, a recessed portion 79 is formed and the lower surface of the recessed portion 79 is formed as a spherical surface portion 79a having the same radius of curvature as the pivoting connecting recess 77a.

Other structure of the plug structure 70C is the same as those of the above described plug structures 70, 70A and 70B and, therefore, overlapping description will be omitted.

According to the plug structure 70C of a coupler, in the same manner as in the above described plug structures 70, 70A and 70B, the valve head 35a of the valve main body 31 can be spaced away from the valve seat 33 to open the valve through the contacting recess 78a and contacting projection 78b by operating the valve stem 35b against the force of the compression helical spring 39 in the same manner as in the plug of an integral structure.

When force which slightly exceeds a normal range of use is applied to this plug P10, the projecting connecting portion 32 is inclined to the central axis of the plug main body 31 at the pivoting connecting recess 77a of the plug main body 31 and the pivoting connecting projection 77b in the base portion of the projecting connecting portion 32 and also at the spherical surfaces of the contacting recess 78a of the valve head 35a and the contacting projection 78b of the valve stem 35b whereby the coupler can be used while the sealed state which performs the function as the coupler can be maintained.

When an excessive force exceeding a normal range of use and causing a damage is applied, the projecting connecting portion 32 is separated from the pivoting connecting recess 77a and the pivoting connecting projection 77b between the plug main body 31 and the projecting connecting portion 32 and, simultaneously, the upper side valve stem 35b is separated with the separated projecting connecting portion 32 from the contacting recess 78a and the contacting projection 78b and the sealed state can be maintained by means of the remaining valve head 35a located at the bottom portion of the pivoting connecting recess 77a whereby the valve head 35a cannot be touched directly with a finger.

At this time, the projecting connecting portion 32 to which an excessive force is applied is separated but application of an excessive force to the plug main body 31 can be prevented as compared to a case where the projecting connecting portion 32 is broken off.

By this plug structure 70C of a coupler also, when an excessive force such as an excessive bending force is applied to the projecting connecting portion 32, it can be used in an inclined state to a force of a certain degree and, when a larger force is applied, the projecting connecting portion 32 is separated but the function of the valve is maintained and the sealed state can be maintained whereby leakage of contents from the container can be prevented and the coupler can be used safely.

Thus, a predetermined plug can be accurately selected and connected for supplying methanol in a container to a methanol fuel cell or replacing a container itself and, when a plug of a coupler is damaged by application of an excessive force, the sealed state can be maintained and the coupler can be used safely even if the projecting connecting portion 32 is inclined or separated..

Further, according to this plug structure 70C of a coupler, since he base portion of the projecting connecting portion 32 is formed as a substantially spherical surface along which the projecting connecting portion 32 can be pivoted, when an excessive force is applied to the projecting connecting portion 32, such force can be partly released by pivoting of the base portion whereby the range of use of the coupler in the fitted and connected state can be broadened.

Further, according to this plug structure 70C of a coupler, since the dividing surfaces of the valve head 35a and the valve stem 35b are formed as substantially spherical surfaces along which the valve head 35a and the valve stem 35b can pivot to each other, when an excessive force is applied to the valve, such force can be partly released by pivoting movement at the dividing surfaces whereby the range of use of the coupler in the fitted and connected state can be broadened. By combining the structure by which the projecting connecting portion 32 can be pivoted, the plug structure becomes a kind of universal joint which can absorb a further larger force whereby the sealed state can be maintained and the range of use of the coupler can be broadened.

In the above described embodiment, the projecting connecting portion 32 is made pivotable relative to the plug main body 31 and the valve stem 35b is also made pivotable relative to the valve head 35a. Alternatively, either one of them only may be made pivotable and the other may be inclined within a range of elastic deformation so that the coupler can be used while the sealed state is maintained.

Although description has been omitted for avoiding duplication, in the respective embodiments described above, provision of the key and key slot as the discrimination means in the socket and the plug may be reversed, or the engaging portion and the receiving portion of the connection holding means by be reversed.

Description has been made by way of example about connecting a methanol container of methanol for a methanol fuel cell to a fuel cell main body. The use of the plug structure of the present invention is not limited to this but it may be used for other purposes also and it is suitable for use when many types of coupler must be discriminated.

### Industrial Applicability

This invention relates to a plug structure of a coupler consisting of a socket and a plug which are detachably fitted and connected together, which can be connected accurately by a simple operation in a case where liquid or other material from a container to a container on the main body side or where a container itself is replaced and which can maintain a sealed state when an excessive force is applied in the connected state. More particularly, this invention relates to a plug structure of this type which is suitable for use as a plug of a cartridge type container of a methanol fuel cell.

## Claims

1. A plug structure of a coupler consisting of a socket and a plug which are detachably fitted and connected together, said plug structure comprising:
a plug main body of the plug;
a projecting connecting portion provided in the plug main body and being fitted to the socket;
a valve seat provided in the plug main body;
a valve provided in the plug main body and the projecting connecting portion, said valve having a valve head which is urged to the valve seat for sealing; and
means for enabling maintenance of sealing between the valve seat and the valve head even when at least a pat of the projecting connecting portion is broken and separated from the main body.

2. A plug structure of a coupler as defined in claim 1 wherein a base portion of the projecting connecting portion being fitted to the socket is formed as a breaking starting portion on the side of the plug.

3. A plug structure of a coupler as defined in claim 2 wherein the breaking starting portion on the side of the plug is made by a recess formed in the entire periphery or a part of the periphery of a middle portion of the projecting connecting portion.

4. A plug structure of a coupler as defined in any of claims 1 - 3 wherein the plug main body and the projecting connecting portion consist of two divided portions.

5. A plug structure of a coupler as defined in claim 4 wherein the plug main body and the projecting connecting portion which are two divided portions are detachably fitted and connected to each other.

6. A plug structure of a coupler as defined in claim 4 or 5 wherein a base portion of the projecting connecting portion is formed in a substantially spherical surface which can be moved in a pivotal motion.

7. A plug structure of a coupler as defined in any of claims 1 - 6 wherein the valve is made of two divided portions of a valve head and a portion having at least a valve stem on the outside of the valve head and a dividing surface of the valve stem is formed in a substantially spherical surface which can be moved in a pivotal motion.

8. A plug structure of a coupler as defined in any of claims 1 - 7 wherein a breaking starting portion on the side of the valve is formed in the valve and a breaking starting portion on the side of the valve provided in the base portion or the middle portion of the projecting connecting portion, or a dividing surface between the plug main body and the projecting connecting portion is provided outside of the breaking starting portion on the valve side or a dividing surface between a valve head and a portion having at least a valve stem thereby to prevent an erroneous operation of the valve head when the projecting connecting portion is broken and separated.

9. A plug structure of a coupler as defined in any of claims 1 - 8 wherein a gripping portion is provided in a dividing surface between the plug main body and the projecting connecting portion for enabling taking out of the projecting connecting portion after breaking and separating of the projecting connecting portion.
